Europäisches Patentamt

European Patent Office

Office européen des brevets

(19)

(11) Veröffentlichungsnummer : **0 293 983 B1**

(12) # EUROPÄISCHE PATENTSCHRIFT

(45) Veröffentlichungstag der Patentschrift :
15.05.91 Patentblatt 91/20

(51) Int. Cl.⁵ : **G01N 21/71, G01J 3/28, B07C 5/342**

(21) Anmeldenummer : 88201073.9

(22) Anmeldetag : 30.05.88

(54) Verfahren zur Analyse von Metallteilchen.

(30) Priorität : 04.06.87 DE 3718672

(43) Veröffentlichungstag der Anmeldung :
07.12.88 Patentblatt 88/49

(45) Bekanntmachung des Hinweises auf die
Patenterteilung :
15.05.91 Patentblatt 91/20

(84) Benannte Vertragsstaaten :
AT BE CH DE ES FR GB GR IT LI LU NL SE

(56) Entgegenhaltungen :
EP-A- 0 184 590
GB-A- 2 067 753
APPLIED SPECTROSCOPY, Band 41, Nr. 4,
Mai/Juni 1987, Seiten 572-579, Society for Applied Spectroscopy, Baltimore, US; D.A. CRE-
MERS: "The analysis of metals at a distance
using laser-induced breakdown spectroscopy"
IDEM
ELECTRO-OPTICAL SYSTEMS DESIGN, Band
14, Nr. 10, Oktober 1982, Seiten 35-41; T.R.
LOREE et al.: "AES by LIBS may help you"

(56) Entgegenhaltungen :
NAVY TECHNICAL DISCLOSURE BULLETIN,
Band 10, Nr. 1, September 1984, Seiten 97-101;
C. BELL et al.: "A method of remote optical
spectrographic analysis of test materials"
APPLIED SPECTROSCOPY, Band 40, Nr. 4,
Mai/Juni 1986, Seiten 491-494, Society for Applied Spectroscopy; J. MILLARD et al.:
"Time-resolved laser-induced breakdown
spectrometry for the rapid determination of
beryllium in beryllium-copper alloys"

(73) Patentinhaber : METALLGESELLSCHAFT AG
Reuterweg 14 Postfach 3724
W-6000 Frankfurt/M.1 (DE)

(72) Erfinder : Pötzschke, Manfred, Dr.
Ulmenweg 45
W-6242 Kronberg 2 (DE)
Erfinder : Sattler, Hans-Peter, Dr.
Ferdinandstrasse 22
W-6380 Bad Homburg (DE)
Erfinder : Hohla, Kristian, Dr.
Adolf-Sandberger Strasse 1 a
W-8000 München 60 (DE)
Erfinder : Loree, Thomas R., Dr.
4053 Sycamore
Los Alamos New Mexico 87 544 (US)

## Beschreibung

Die Erfindung bezieht sich auf ein Verfahren zum Analysieren von Metallteilchen hinsichtlich ihrer chemischen Zusammensetzung und zur Gewinnung eines Sortiersignals, wobei die Teilchen einem gepulsten Laserstrahl ausgesetzt, partiell zu Plasma verdampft und die Spektrallinien des Plasmas zur Identifizierung herangezogen werden.

Derartige Verfahren sind unter der englischsprachigen Abkürzung LIBS, d.h. Laser-Induced Breakdown Spectroscopy, bekanntgeworden. Sie beruhen auf dem von Fraunhofer entwickelten klassischen Spektroskopieverfahren, bei dem zwischen dem zu analysierenden Material und einer Elektrode ein Lichtbogen gezündet, Probenmaterial verdampft und das entstehende Weißlicht durch Beugung an einem Gitter spektral zerlegt wird. Durch Vergleich des Beugungsspektrums mit Vergleichsspektren und-/oder Ausmessen einzelner Spektrallinien nach Wellenlänge und Intensität, kann man dann qualitativ und quantitativ bestimmen, welche Elemente die untersuchte Probe enthält. Der Zeitaufwand beträgt je nach Fragestellung Minuten bis Stunden.

Bei dem bekannten LIBS-Verfahren wird anstelle des Lichtbogens ein Laserstrahl benutzt und das Beugungsspektrum oder ein Teil davon mit einer Dioden-Anordnung erfaßt und in einem optischen Mehrkanal-Analysator ausgewertet (vergl. auch Loree, T.R. ; Radziemski, L.J. : "The identification of impurities in metals by laser-induced breakdown spectroscopy". Proc. Tech. Program-Electro-Opt./Laser Conf. Expo 1981, 28-33).

Da mit einem solchen Verfahren eine lokale Spektralanalyse von Materialien in sehr kleinen Volumina bzw. auf sehr kleinen Flächen durch Fokussierung des Laserstrahls möglich ist, kann man es zur schnellen qualitativen Analyse von Metallteilchen benützen (Z. : EOSD Electro-Optical Systems Design, Vol. 14 (1982), 10, S. 35-41). Gemäß Z. : Applied Spectroscopy, Vol. 41 (1987), 4, S. 572-579 wird ein gepulster Nd : YAG-Laser oder $CO_2$-Laser zur Sortierung von aus Metallteilchen unterschiedlicher stofflicher Zusammensetzung bestehenden Schrotten vorgeschlagen. Die Geschwindigkeit der Analyse wird lediglich durch die Wiederholungsrate des Lasers, die Geschwindigkeit des elektronischen Detektors und die Geschwindigkeit, mit der die Metallteilchen dem Analyseort zugeführt werden, begrenzt.

Der Zeitaufwand für eine Analyse nach diesem Verfahren beträgt 1 bis 2 Sekunden, was für viele Anwendungsfälle ausreichend ist, nicht aber für Sortieraufgaben mit hohem Massendurchsatz, wie beispielsweise bei der Aufbereitung von Shredder-Schrott. Hier fällt nach Abtrennung der ferromagnetischen Komponente mittels Magnetscheidung und der nichtmetallischen Komponente mittels Sink-Schwimm-Verfahren ein stückiger Restschrott an, der etwa zur Hälfte aus Aluminium, im übrigen im wesentlichen aus Zink, Kupfer, Blei und Edelstahl besteht. Unsortiert hat dieser Restschrott einen Wert von 700,- bis 800,- DM/t, sortiert einen Wert in der Größenordnung von 2.000,- DM/t. Allein in der Bundesrepublik Deutschland fallen jährlich etwa 170000 t derartigen Restschrotts an. Die mögliche Wertschöpfung bei einer Auftrennung dieser Schrottmengen in die einzelnen Komponenten bzw. in für eine Wiederverwertung geeignete Komponentengruppe liegt somit in der Größenordnung von 200 Mio.DM.

Zur Realisierung dieser Wertschöpfung sind schon verschiedene Trennverfahren vorgeschlagen worden. Bisher hat sich aber keines technisch und wirtschaftlich durchsetzen können.

Der Erfindung liegt die Aufgabe zugrunde, das eingangs genannte Verfahren so weiterzuentwickeln, daß es für Sortieraufgaben mit Massendurchsatz, wie bei der genannten Restschrottaufbereitung, einsetzbar ist. Dazu gehört, daß – bei einer mittleren Teilchengröße von 15 bis 65 mm – mindestens 30 Teilchen pro Sekunde analysiert werden müssen und daß der Aufwand der Einzelanalyse deutlich unter der pro Teilchen möglichen Wertschöpfung bleibt.

Zur Lösung dieser Aufgabe wird vorgeschlagen, daß

a) pro Sekunde mindestens 30 Metallteilchen mit einer Größe von 15 bis 65 mm analysiert werden,

b) jedes Metallteilchen an einer Stelle der Oberfläche mit einem Laserstrahl beaufschlagt und das dabei entstehende Plasma entfernt wird,

c) die so gereinigte Stelle erneut mit einem Laserstrahl beaufschlagt und ein für das Metallteilchen charakteristisches Plasma erzeugt wird,

d) aus der Gesamtstrahlung des Plasmas bestimmte vorgebbare Wellenlängen herausgefiltert werden,

e) aus den Strahlungsintensitäten der herausgefilterten Wellenlängen zahlenmäßige Verhältniswerte gebildet werden und

f) aus diesen Verhältnissen durch Vergleich mit einstellbaren Grenzwerten ein Sortiersignal gewonnen wird.

In weiterer Ausbildung des Erfindungsgedankens ist vorgesehen, daß anstelle einzelner Wellenlängen bestimmte schmale Wellenlängenbereiche herausgefiltert werden und/oder daß die Strahlung des Plasmas nur während eines bestimmten Zeitabschnitts für die Analyse herangezogen wird. Die Verdampfungsprodukte der zur Reinigung vorgenommenen Laserbestrahlung werden zweckämigerweise entfernt, bevor der Laser zur Erzeugung eines charakteristischen Plasmas gezündet wird. Es ist auch möglich, daß mehr als ein Verhältniswert gebildet und daß mehrere Grenzwerte für den Vergleich vorgegeben werden.

Zweckmäßigerweise wird bei der Analyse von nach Form und Größe unterschiedlicher Metallteilchen eine Laseroptik verwendet, bei der der in gewissen Grenzen schwankende Abstand zwischen Laserquelle und Teilchenoberfläche keinen Einfluß auf das Meßergebnis hat. Der gepulste Laserstrahl kann durch ein Trigger-Signal ausgelöst werden, das durch den Eintritt des Metallteilchens in die Prüfstrecke gewonnen wird. Man kann auch vorsehen, daß die Metallteilchen nacheinander mehr als eine Prüfstrecke durchlaufen.

Die Auswertung aller gewonnener Meßwerte und Daten sowie die Erzeugung des gewünschten Sortiersignals erfolgt zweckmäßigerweise elektronisch. Schließlich kann es vorteilhaft sein, daß die beim ersten, zur Reinigung auf ein Metallteilchen abgegebenen Laserpuls entstehende Plasmastrahlung auf für Aluminium charakteristische Wellenlängen untersucht und bei positivem Ergebnis die Bestrahlung des Metallteilchens mit weiteren Laserpulsen gestoppt wird.

Zur Durchführung des Verfahrens nach den Ansprüchen 1 bis 9 wird eine Vorrichtung vorgeschlagen, die gekennzeichnet ist durch

a) eine geeignete Einrichtung zum Transport der vereinzelten Metallteilchen durch die Prüfstrecke,

b) einen Trigger-Signalgeber mit Trigger-Detektor und Trigger-Elektronik zur Erzeugung eines Trigger-Signals beim Eintritt eines Teilchens in die Prüfstrecke,

c) eine Einrichtung zur partiellen Reinigung der Oberfläche der Metallteilchen mittels Laserstrahlen,

d) einen Laser zur Erzeugung gepulster Laserstrahlen,

e) ein oder mehrere Spektralfilter mit jeweils zugeordnetem Spektraldetektor,

f) Mittel zur Bildung der zahlenmäßigen Verhältniswerte der aus den Wellenlängen herausgefilterten Strahlungsintensitäten sowie Mittel zum Vergleich dieser Verhältniswerte mit einstellbaren Grenzwerten,

g) einen Computer zur Verarbeitung der gewonnenen Meßwerte und Daten und zur Erzeugung eines Sortiersignals.

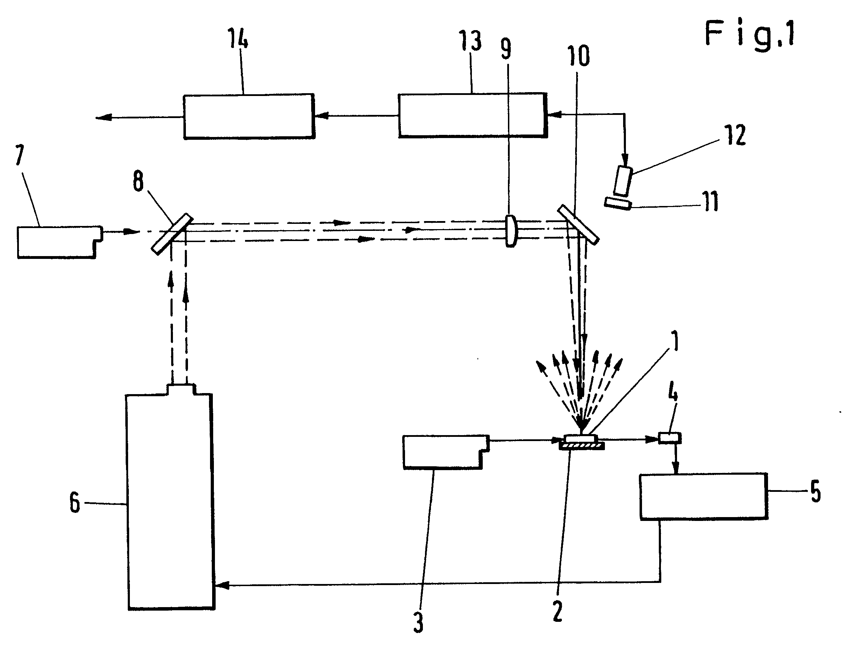

Weitere Einzelheiten des Verfahrens werden anhand des in Figur 1 dargestellten Ausführungsbeispiels näher erläutert :

In Figur 1 sind die wesentlichen Teile der Einrichtung zur Analyse von Metallteilchen schematisch dargestellt. Sie besteht aus

a) einem Transportband (2), mit dem die Metallteilchen (1) senkrecht zur Darstellungsebene durch die Prüfstrecke bewegt werden,

b) einem Trigger-Laser (3) mit Trigger-Detektor (4) und Trigger-Elektronik (5), womit das Eintreffen eines Metallteilchens festgestellt und ein Startsignal erzeugt wird,

c) einem Puls-Laser (6) zur Erzeugung des für die partielle Reinigung und die Analyse des Probenmaterials erforderlichen Laserstrahls, der über den Spiegel (8), die fokussierende Linse (9) und den Spiegel (10) auf das Metallteilchen (1) gelenkt wird,

d) einen Spektral-Detektor (12) mit vorgesetztem Spektral-Filter (11) und Detektor-Elektronik (13), die die Meßzeiten des Spektral-Detektors (12) steuert und ein computerlesbares Meßergebnis erstellt sowie

e) einem Auswert-Computer (14), in dem die Verhältniswerte der Meßwerte gebildet und mit vorgegebenen Grenzwerten verglichen und schließlich Signale für die Ansteuerung einer Sortiereinrichtung gewonnen werden.

Außerdem ist noch ein Orientierungslaser (7) vorgesehen, der einen sichtbaren Laserstrahl erzeugt, der auf den gleichen Meßpunkt fokussiert ist wie der Laserstrahl des Puls-Lasers (6).

Das Transportband (2) wird von einer nicht dargestellten Einrichtung zum Vereinzeln der Metallteilchen (1) mit einer Frequenz von im Mittel 30 Teilchen pro Sekunde beschickt und fördert die Metallteilchen (1) mit entsprechender Geschwindigkeit durch die Prüfstrecke. Tritt ein Metallteilchen in den Strahlengang des Trigger-Lasers (3) ein, so wird dies vom Trigger-Detektor (4) registriert und führt über die Trigger-Elektronik zu einem Startsignal, mit dem der Puls-Laser (6) gezündet wird. Dessen Laserstrahl bewirkt, daß das Metallteilchen (1) mit einer vorgegebenen Anzahl von Impulsen partiell zu einem Plasma verdampft und gereinigt wird. Mit einer vorgegebenen Anzahl weiterer Impulse wird dann das Plasma erzeugt, das zu einer Analyse des Metallteilchens ausgewertet wird. Die Strahlung des Plasmas wird von dem Spektral-Detektor (12) registriert, wobei durch das Spektral-Filter (11) der größte Teil der Plasmastrahlung ausgeblendet und nur eine bestimmte Wellenlänge bzw. ein bestimmter schmaler Wellenlängenbereich durchgelassen wird. Außerdem wird durch die Detektor-Elektronik (13) dafür gesorgt, daß der Spektral-Detektor (12) die Plasmastrahlung nur während eines definierten Zeitabschnitts registriert. Dadurch erreicht man, daß das Hintergrundrauschen der Plasmastrahlung auf ein Minimum reduziert wird und damit die Spektren besser identifiziert werden können.

Steht für eine Messung ein Zeitraum von einer Tausendstel-Sekunde zur Verfügung, so wird er bei dem erfindungsgemäßen Verfahren etwa folgendermaßen ausgenutzt. Vom Eintritt des Metallteilchens in den Strahl des Trigger-Lasers bis zum ersten "Schub" des Puls-Lasers vergehen etwa $5 \times 10^{-5}$ Sekunden. Der Laser-Schuß selbst dauert nur etwa $1 \times 10^{-8}$ Sekunden, so daß die "Reinigung" nach rund $5 \times 10^{-5}$ Sekunden abgeschlossen ist. Ebenso ist die Zeit für die zur Analyse erforderlichen Laser-Schüsse praktisch zu vernachlässigen. Die anschließende Wartezeit bis zum Öffnen des Spektral-Detektors beträgt etwa 5 × 10⁻⁷ Sekunden. Für den eigentlichen Meßvorgang sind 5 × 10⁻⁶ Sekunden vorgesehen. Alle bisher genannten Vorgänge benötigen zusammen nicht mehr als 0,6 × 10⁻⁴ Sekunden, so daß für die Auswertung im Computer noch 9,4 – 10⁻⁴ Sekunden zur Verfügung stehen. Diese Zeit ist für einen Meßvorgang bei weitem ausreichend. Das Verfahren enthält noch Spielraum für den Fall, daß die Metallteilchen deutlich schneller als im bestand von 0.03 Sekunden folgen, d.h., daß deutlich höhere Durchsatzleistungen verlangt werden.

Um die genannten Zeiten etwas anschaulicher zu machen sei angenommen, das theoretische Meßintervall von 10⁻³ Sekunden entspräche der Länge von einem Meter oder 1.000 Millimeter. Dann würden 50 mm der Zeit zwischen dem Eindringen des Teilchens in den Strahl des Trigger-Lasers und dem Laser-Schub entsprechen. Die Schußzeit entspricht nur einer Strecke von 0,01 mm, die Wartezeit einer Strecke von 0,5 mm und die Meßzeit einer Strecke von 5 mm. Für die Auswertung blieben dann noch etwa 940 mm übrig.

Bei diesen kurzen Meßzeiten spielt es keine Rolle, daß die Metallteilchen bei der Analyse in Bewegung sind. Bei der gewählten Anordnung wird das Meßergebnis auch nicht dadurch verfälscht, daß die Metallteilchen – im Rahmen einer gewissen Klassierung – unterschiedlich groß sind und deswegen bei der Messung unterschiedliche bestände von der Laser-Optik aufweisen.

**Ansprüche**

1. Verfahren zum Analysieren von Metallteilchen hinsichtlich ihrer chemischen Zusammensetzung und zur Gewinnung eines Sortiersignals, wobei die Teilchen einem gepulsten Laserstrahl ausgesetzt, partiell zu Plasma verdampft und die Spektrallinien des Plasmas zur Identifizierung herangezogen werden, dadurch gekennzeichnet, daß

a) pro Sekunde mindestens 30 Metallteilchen mit einer Größe von 15 bis 65 mm analysiert werden,

b) jedes Metallteilchen an einer Stelle der Oberfläche mit einem Laserstrahl beaufschlagt und das dabei entstehende Plasma entfernt wird,

c) die so gereinigte Stelle erneut mit einem Laserstrahl beaufschlagt und ein für das Metallteilchen charakteristisches Plasma erzeugt wird,

d) aus der Gesamtstrahlung des Plasmas bestimmte vorgebbare Wellenlängen herausgefiltert werden,

e) aus den Strahlungsintensitäten der herausgefilterten Wellenlängen zahlenmäßige Verhältniswerte gebildet werden und

f) aus diesen Verhältnissen durch Vergleich mit einstellbaren Grenzwerten ein Sortiersignal gewonnen wird.

2. Verfahren nach Anspruch 1, dadurch gekennzeichnet, daß anstelle einzelner Wellenlängen bestimmte schmale Wellenlängenbereiche herausgefiltert werden.

3. Verfahren nach Anspruch 1 oder 2, dadurch gekennzeichnet, daß die Strahlung des Plasmas nur während eines bestimmten Zeitabschnitts für die Analyse herangezogen wird.

4. Verfahren nach einem der Ansprüche 1 bis 3, dadurch gekennzeichnet, daß mehr als ein Verhältniswert gebildet und daß mehrere Grenzwerte für den Vergleich vorgegeben werden.

5. Verfahren nach einem der Ansprüche 1 bis 4, dadurch gekennzeichnet, daß bei der Analyse von nach Form und Größe unterschiedlicher Metallteilchen eine Laseroptik verwendet wird, bei der der in gewissen Grenzen schwankende bestand zwischen Laserquelle und Teilchenoberfläche keinen Einfluß auf das Meßergebnis hat.

6. Verfahren nach einem der Ansprüche 1 bis 5, dadurch gekennzeichnet, daß der Laser durch ein Trigger-Signal gezündet wird, das durch den Eintritt des Metallteilchens in die Prüfstrecke gewonnen wird.

7. Verfahren nach einem der Ansprüche 1 bis 6, dadurch gekennzeichnet, daß die Metallteilchen nacheinander mehr als eine Prüfstrecke durchlaufen.

8. Verfahren nach einem der Ansprüche 1 bis 7, dadurch gekennzeichnet, daß die Auswertung aller gewonnenen Meßwerte und Daten sowie die Erzeugung des gewünschten Sortiersignals elektronisch erfolgt.

9. Verfahren nach einem der Ansprüche 1 bis 8, dadurch gekennzeichnet, daß die beim ersten, zur Reinigung auf ein Metallteilchen abgegebenen Laserpuls entstehende Plasmastrahlung auf für Aluminium charakteristische Wellenlängen untersucht und bei positivem Ergebnis die Bestrahlung des Metallteilchens mit weiteren Laserpulsen gestoppt wird.

10. Vorrichtung zur Durchführung des Verfahrens nach einem der Ansprüche 1 bis 9, gekennzeichnet durch

a) eine geeignete Einrichtung (2) zum Transport der vereinzelten Metallteilchen (1) durch die Prüfstrecke,

b) einen Trigger-Signalgeber (3) mit Trigger-Detektor (4) und Trigger-Elektronik (5) zur Erzeugung eines Trigger-Signals beim Eintritt eines Teilchens in die Prüfstrecke,

c) eine Einrichtung zur partiellen Reinigung der Oberfläche der Metallteilchen mittels Laserstrahlen,

d) einen Laser (6) zur Erzeugung gepulster Laserstrahlen,

e) ein oder mehrere Spektralfilter (11) mit jeweils zugeordnetem Spektraldetektor (12),

f) Mittel (14) zur Bildung der zahlenmäßigen Verhältniswerte der aus den Wellenlängen herausgefilterten Strahlungsintensitäten sowie Mittel (14) zum Vergleich dieser Verhältniswerte mit einstellbaren Grenzwerten,

g) einen Computer zur Verarbeitung der gewonnenen Meßwerte und Daten und zur Erzeugung eines Sortiersignals.

## Claims

1. A method for analysing metal particles with regard to their chemical composition and for obtaining a sorting signal, wherein the particles are exposed to a pulsed laser beam, are partially vaporized to plasma, and the spectral lines of the plasma are drawn upon for identification, characterized in that

a) per second at least 30 metal particles with a size of 15 to 65 mm are analysed,

b) each metal particle is acted upon with a laser beam on one site of the surface and the plasma resulting thereby is removed,

c) the site which is thus cleaned is acted upon again with a laser beam and a plasma is produced which is characteristic of the metal particle,

d) from the total radiation of the plasma, particular predeterminable wavelengths are filtered out,

e) from the radiation intensities of the filtered-out wave lengths, numerical relationship values are formed and

f) from these relationships, through comparison with adjustable threshold values, a sorting signal is obtained.

2. A method according to Claim 1, characterized in that instead of individual wave lengths, particular narrow wave length bands are filtered out.

3. A method according to Claim 1 or 2, characterized in that the radiation of the plasma is drawn upon only during a particular period of time for the analysis.

4. A method according to one of Claims 1 to 3, characterized in that more than one relationship value is formed and that a plurality of threshold values is given for the comparison.

5. A method according to one of Claims 1 to 4, characterized in that in the analysis of metal particles which are different in shape and size, a laser optical system is used, in which the distance, fluctuating within certain thresholds, between the laser source and the particle surface has no effect on the measurement result.

6. A method according to one of Claims 1 to 5, characterized in that the laser is ignited by a trigger signal which is obtained through the entry of the metal particle into the test section.

7. A method according to one of Claims 1 to 6, characterized in that the metal particles run in succession through more than one test section.

8. A method according to one of Claims 1 to 7, characterized in that the evaluation of all the obtained measurement values and data and also the production of the desired sorting signal takes place electronically.

9. A method according to one of Claims 1 to 8, characterized in that the plasma radiation occurring on the first laser pulse which is emitted onto a metal particle for cleaning, investigates for wave lengths which are characteristic of aluminium and in the case of a positive result, the irradiation of the metal particle with further laser pulses is stopped.

10. A device to carry out the method according to one of Claims 1 to 9, characterized by

a) a suitable arrangement (2) for the transportation of the separated metal particles (1) through the test section,

b) a trigger signal transmitter (3) with trigger detector (4) and trigger electronics (5) to produce a trigger signal on entry of a particle into the test section,

c) an arrangement for the partial cleaning of the surface of the metal particles by means of laser beams,

d) a laser (6) to produce pulsed laser beams,

e) one or more spectral filters (11) with a respectively associated spectral detector (12),

f) means (14) for the formation of the numerical relationship values of the radiation intensities filtered out of the wave lengths, and also means (14) for the comparison of these relationship values with adjustable threshold values,

g) a computer for the processing of the obtained measurement values and data and for the production of a sorting signal.

## Revendications

1. Procédé pour analyser des particules métalliques du point de vue de leur composition chimique et pour obtenir un signal de triage, qui consiste à exposer des particules à un faisceau laser pulsé, à les volatiliser partiellement en un plasma et à tirer parti des raies spectrales du plasma pour l'identification, caractérisé en ce qu'il consiste

a) à analyser par seconde au moins trente particules métalliques d'une dimension de 15 à 65 mm,

b) à envoyer un faisceau laser en un endroit de la surface de chaque particule métallique et à éliminer le plasma ainsi formé,

c) à envoyer à nouveau un faisceau laser à l'endroit ainsi nettoyé et à produire un plasma caractéristique de la particule métallique,

d) à filtrer dans le rayonnement total du plasma certaines longueurs d'onde prescrites,

e) à former, à partir des intensités de rayonnement des longueurs d'onde filtrées, des rapports numériques, et

f) à obtenir, à partir de ces rapports, un signal de triage par comparaison à des seuils réglables.

2. Procédé suivant la revendication 1, caractérisé en ce qu'il consiste à filtrer des domaines de longueurs d'onde étroits déterminées au lieu de longueurs d'onde individuelles.

3. Procédé suivant la revendication 1 ou 2, caractérisé en ce qu'il consiste à ne tirer parti du rayonnement du plasma pour l'analyse que pendant un laps de temps déterminé.

4. Procédé suivant l'une des revendications 1 à 3, caractérisé en ce qu'il consiste à former plus d'un rapport et à prescrire plusieurs seuils pour la comparaison.

5. Procédé suivant l'une des revendications 1 à 4, caractérisé en ce qu'il consiste à utiliser, pour l'analyse de particules métalliques différentes par la forme et par la dimension, une optique de laser, dans laquelle la distance, qui fluctue dans certaines limites, entre la source laser et la surface des particules n'a pas d'influence sur le résultat de la mesure.

6. Procédé suivant l'une des revendications 1 à 5, caractérisé en ce qu'il consiste à amorcer le laser par un signal de déclenchement, obtenu par l'introduction de la particule métallique dans la zone d'analyse.

7. Procédé suivant l'une des revendications 1 à 6, caractérisé en ce qu'il consiste à faire passer les particules métalliques successivement dans plus d'une zone d'analyse.

8. Procédé suivant l'une des revendications 1 à 7, caractérisé en ce qu'il consiste à effectuer électroniquement l'exploitation de toutes les valeurs de mesure et données obtenues, ainsi que la production du signal de triage souhaité.

9. Procédé suivant l'une des revendications 1 à 8, caractérisé en ce qu'il consiste à étudier les longueurs d'onde caractéristiques de l'aluminium dans le rayonnement de plasma créé par la première impulsion laser émise pour le nettoyage de la particule métallique et, en cas de résultat positif, à cesser d'exposer la particule métallique à d'autres impulsions laser.

10. Dispositif pour la mise en oeuvre du procédé suivant l'une des revendications 1 à 9, caractérisé par

a) un dispositif (2) destiné à transporter les particules métalliques (1) individuelles dans la zone d'analyse,

b) un générateur de signaux à déclenchement (3) comprenant un détecteur à déclenchement (4) et une électronique à déclenchement (5) en vue de produire un signal de déclenchement lors de l'entrée d'une particule dans la zone d'analyse,

c) un dispositif de nettoyage partiel de la surface des particules métalliques au moyen d'un faisceau laser,

d) un laser (6) de production d'un faisceau laser pulsé,

e) un ou plusieurs filtres spectral (11) ayant respectivement un détecteur de spectres (12) associé,

f) des moyens (14) de formation du rapport numérique des intensités de rayonnement des longueurs d'onde filtrées ainsi que des moyens (14) de comparaison de ces rapport à des seuils réglables,

g) un ordinateur de traitement des valeurs de mesure et des données obtenues et de production d'un signal de triage.

Fig.1

EP 0 293 983 B1